# EUROPEAN PATENT APPLICATION

(11) **EP 2 498 182 A1**
(43) Date of publication of application: **12.09.2012**
(21) Application number: 11001787.8
(22) Date of filing: 03.03.2011
(51) Int. Cl.: G06F 9/455

(54) **Method and apparatus for providing a standardized virtualization interface**

(71) Applicant: ABB Technology AG, 8050 Zürich (CH)
(72) Inventor: Stich, Christian, 69493 Hirschberg-Leutershausen (DE); Dix, Marcel, 68187 Mannheim (DE); Aleksy, Markus, 67071 Ludwigshafen (DE); Maczey, Sylvia, 69493 Hirschberg (DE)
(74) Representative: Partner, Lothar

(57) **Abstract**

The invention relates to a virtualization module (7) for interfacing a hypervisor (5) and one or more guest operating systems (3) in a virtual machine environment, comprising:
- a first software interface (10) for communicating with the hypervisor (5);
- a second software interface (11) for communicating with the one or more operating systems (5);
- a mapping unit for mapping communication between the first software interface (10) and the second software interface (11).

## Description

### Technical field

The present invention relates to embedded systems, controllers and real-time systems which comprise virtual machines allowing the migration of existing software systems.

### Prior art

Virtual machines are well known in the art. A virtual machine is a software implementation of a programmable machine running on a physical machine such as a computer. The virtual machine executes programs like a physical machine and usually provides a complete system platform which supports the execution of a complete operating system. Such system virtual machines allow for sharing the resources of the underlying physical machine between multiple virtual machines each running its own operating system. The software layer providing the virtualization is called a virtual machine monitor or hypervisor.

There are several approaches to virtualization such as paravirtualization or hardware-assisted virtualization. Paravirtualization requires the guest operating systems to be modified and precompiled in order to be able to cooperate with the hypervisor. The paravirtualization usually requires a manual modification of the guest operating system and its recompilation, which often is difficult to accomplish. Therefore, the source code of the respective guest operating system needs to be available, which might not be the case for commercial operating systems.

In contrast thereto, hardware-assisted virtualization is a platform virtualization approach that enables full virtualization utilizing additional hardware capabilities. Without comprehensive hardware support, hypervisors need to emulate a significant part of the guest's hardware environment, thereby reducing performance.

In recent systems, CPUs introduced enhancements such as additional instructions and CPU modes to support virtualization. For instance, the CPUs support transitions between the user or supervisor and hypervisor state. The hardware-assisted virtualization is thus tied to the respective CPUs used that provide additional virtualization features and cannot be used on CPUs without virtualization support.

Apart from virtualization, recompilation as well as binary code transformation can be used for the migration of existing applications to a new environment. However, the recompilation of existing application files also requires the availability of the source code.

With respect to applications, binary code transformation provides another basically suitable approach to software migration. It aims at translating the object code of an application (binary code) from a legacy machine to an equivalent object code for another machine. Although this task is easy to accomplish when a straight-forward sequence of machine instructions shall be translated from one machine language base to another, other considerations occurring when mixed data and instructions have to be translated make the task very difficult in practice. Moreover, this approach requires additional efforts due to the development and maintenance of software tools that analyze and adapt existing codes to the desired platform.

Existing hypervisor products usually provide different interfaces to the operating systems operated in the virtual machine environments to provide access to at least a part of the hardware capabilities of the physical system. Guest operating systems running in virtual environments of the physical machine have therefore to be adapted to the hypervisor provided interfaces of the respective hypervisor product used in the physical system. A replacement of the hypervisor product hence causes the need to change or replace all used operating system products.

It is therefore an object of the present invention to render existing hypervisor products compatible with each other, thereby overcoming the need for replacing or changing the operating systems in the virtual environments of the physical machine for each new hypervisor product.

### Summary of the present invention

The above objects are achieved by the virtualization module for interfacing the hypervisor and the guest operating systems in a virtual machine environment according to claim 1 and by the physical machine and the computer program product according to the further independent claims.

Preferred embodiments are indicated in the dependent subclaims.

According to a first aspect, a virtualization module for interfacing a hypervisor and one or more guest operating systems in a virtual machine environment, comprising:
- a first software interface for communicating with the hypervisor;
- a second software interface for communicating with the one or more operating systems; and
- a mapping unit for mapping communication between the first software interface and the second software interface.

One idea of the above virtualization module is to offer a kind of application programming interface which receives the communication from the guest operating system directed to the hypervisor and to translate them into the communication as required by the application programming interface of the used hypervisor solution and vice-versa. Thereby, a hypervisor product can be provided which has a standardized application programming interface such that the existing operating systems can be rendered compatible with each of the hypervisor solutions to which the mapping module is adapted.

Moreover, the mapping unit may be adapted to map communications related to at least one of entry-and-exit points, I/O handling, interrupt handling, time handling, hypervisor initialization of operations and virtual machine state modifications operations.

According to an embodiment, the first software interface may be selected from a set of first software interfaces depending on the kind of hypervisor used.

According to a further aspect, a computer system for interfacing a hypervisor and one or more guest operating systems in a virtual machine environment is provided, the computer system comprises:
- the hypervisor;
- one or more virtual machines each operating an operating system;
- a virtualization module according to one of the preceding claims.

According to a further aspect, a method for interfacing a hypervisor and one or more guest operating systems in a virtual machine environment is provided, comprising the steps of:
- providing a first software interface for communicating with the hypervisor;
- providing a second software interface for communicating with the one or more operating systems; and
- mapping communication between the first software interface and the second software interface.

According to a further aspect, a computer program product is provided including a software code which when executed on a data processing apparatus executes the above method.

### Brief description of the drawings

Preferred embodiments of the present invention will be described in more detail in conjunction with the accompanying drawings in which:
Figure 1 shows a schematic representation of a physical machine running a virtual machine; and
Figure 2 shows a block diagram of the virtualization module as used in the physical machine of Fig. 1.

### Description of preferred embodiments

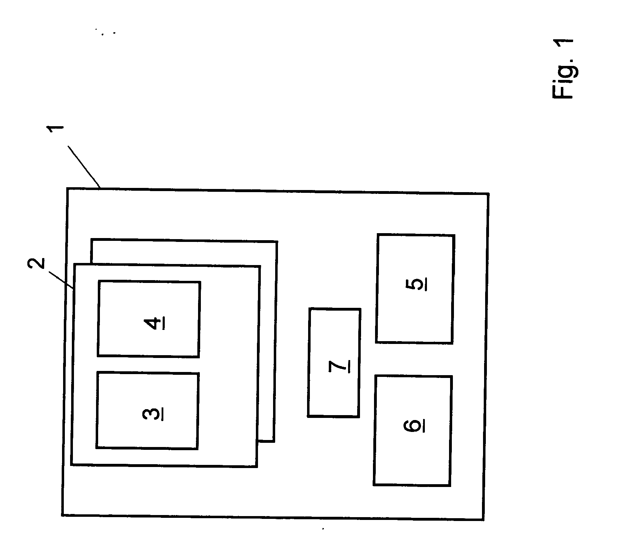

Figure 1 schematically shows a physical machine 1 which includes one or more virtual machines 2. The virtual machines 2 each include an operating system 3 and a real-time application 4 to be executed by means of the operating system 3.

An operating system is software that runs on the physical machine or in the virtual machine environment and manages computer hardware resources. It provides common services for efficient execution of various application software. For hardware functions such as data input and output and memory allocation, the operating system acts as an intermediary between application programs and the computer hardware.

The operation of the virtual machines 2 is monitored by a hypervisor 5. The hypervisor 5 is responsible for establishing the one or more virtual machine environments and their strict separation, for loading a respective guest operating system 3 to an associated one of the virtual machines 2 and manipulating the respective guest operating system 3 such that it can be executed. In other words, the hypervisor 5 presents to the guest operating system a virtual operating platform and monitors the execution of the guest operating system.

Furthermore, the hypervisor 5 provides a hardware control to control at least a part of the hardware functions of the physical machine 1. Hence, the hypervisor 5 includes interfaces for the guest operating systems as well as for the application running in each virtual machine 2. There are numerous hypervisor products available from different suppliers most of which provide different interfaces for communicating with the guest operating systems and the applications executed by the operating systems. On the other hand, the guest operating systems running in virtual machines have to be adapted to the program interface of the hypervisor product presently used. So, each supplier of an operating system has to offer different versions of the operating system for each hypervisor product it can be operated with. This causes a lot of additional recoding effort as the number of existing hypervisor products is growing.

Furthermore, on the physical machine 1 a boot loader 6 is installed which controls how the hypervisor 5 and the virtual machines 2 are booted and executed. The boot loader 6 may be the first program code which is executed when the physical machine 1 is switched on.

Following the above, there is a need for a standardization solution which standardizes the hypervisor products in terms of their virtualization interface providing hardware calls, internal communication with the guest operating systems and the like.

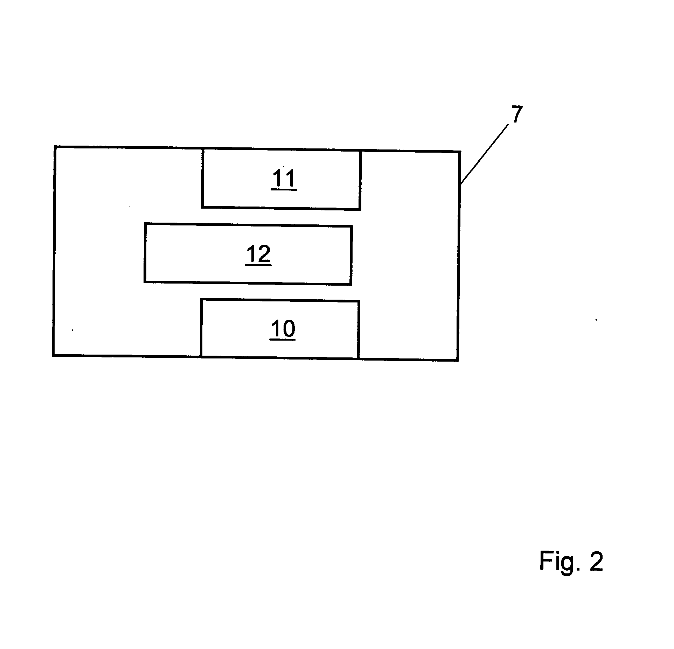

Hence, as shown in the block diagram of Figure 2 a virtualization module 7 is provided which has a first software interface 10 for communicating with the hypervisor 5 and a second software interface 11 for communicating with each of the operating systems 3 in each virtual machine 2. The virtualization module 7 further provides a mapping unit 12 for mapping communication between the hypervisor 5 and the operating systems 3. In particular the mapping comprises the communication of commands from the hypervisor 5 to the operating system 3 of one or more of the virtual machines 2, of commands from one of the operating systems 3 to the hypervisor 5, as well as forwarding functions for information provided by the hypervisor 5 and one of the virtual machines 2 / operating systems 3, respectively.

In practice, the virtualization module 7 has available a set of first software interfaces 10 each being compatible with one or more available hypervisor products. When installing the virtualization module 7 on the physical machine 1, it is manually or automatically selected one of the first software interfaces among the set of available first software interfaces for communicating with the specific hypervisor product installed in the present physical machine 1.

The second software interface 11 provided by the virtualization module 7 provides a standard interface for communicating with each of the guest operating systems 3 in the virtual machines 2 of the physical machine 1. For instance, hardware calls of the guest operating system 3 which allow the operating systems 3 running in virtual machines 2 to use a predefined instruction set in a standardized manner. Thereby, the hypervisor 5 and the paravirtualized real-time guest operating systems 3 are decoupled from each other.

By the virtualization module 7, standardized entry-and-exit points, I/O handling, interrupt handling, time handling, hypervisor initialization of operations as well as virtual machine state modifications operations are introduced. Paravirtualized guest operating systems 3 may use the predefined second software interface 11 to access hardware functions through the hypervisor 5. Thus, the proposed solution enables a replacement or an upgrade of the hypervisor product in use without any further modification of the operating systems and the real-time applications operated in the virtual environments. Furthermore, it reduces the effort regarding the modification of the operating system since it needs to be performed only once for all hypervisor products supported by the software module 7.
- 1: physical machine
- 2: virtual machine
- 3: operating system
- 4: application program
- 5: hypervisor
- 6: boot loader
- 7: virtualization module
- 10: first software interface
- 11: second software interface
- 12: mapping unit

## Claims

1. Virtualization module (7) for interfacing a hypervisor (5) and one or more guest operating systems (3) in a virtual machine environment, comprising:
- a first software interface (10) for communicating with the hypervisor (5);
- a second software interface (11) for communicating with the one or more operating systems (5);
- a mapping unit (12) for mapping communication between the first software interface (10) and the second software interface (11).

2. Virtualization module according to claim 1, wherein the mapping unit (12) is adapted to map communications related to at least one of entry-and-exit points, I/O handling, interrupt handling, time handling, hypervisor initialization of operations and virtual machine state modifications operations.

3. Virtualization module according to claim 1 or 2, wherein the first software interface (10) is selected from a set of first software interfaces depending on the kind of hypervisor used.

4. Computer system for interfacing a hypervisor (5) and one or more guest operating systems (3) in a virtual machine environment, the computer system comprises:
- the hypervisor (5);
- one or more virtual machines (2) each operating an operating system (3);
- a virtualization module (7) according to one of the preceding claims.

5. Method for interfacing a hypervisor (5) and one or more guest operating systems (3) in a virtual machine environment, comprising the steps of:
- providing a first software interface (10) for communicating with the hypervisor (5);
- providing a second software interface (11) for communicating with the one or more operating systems (5); and
- mapping communication between the first software interface (10) and the second software interface (11).

6. Computer program product including a software code which when executed on a data processing apparatus executes the method according to claim 5.
